Europäisches Patentamt

**European Patent Office**

Office européen des brevets

(11) Publication number: **0 244 402 B1**

(12) **EUROPEAN PATENT SPECIFICATION**
published in accordance with Art.
158(3) EPC

(45) Date of publication of patent specification: **12.06.91** (51) Int. Cl.⁵: **A01F 7/06, A01F 12/18, A01F 12/44**

(21) Application number: **85905828.1**

(22) Date of filing: **26.11.85**

(86) International application number:
**PCT/FI85/00094**

(87) International publication number:
**WO 86/03093 (05.06.86 86/12)**

(54) **THE HARVESTING AND ASSORTING MACHINE.**

(30) Priority: **27.11.84 FI 844648**

(43) Date of publication of application:
**11.11.87 Bulletin 87/46**

(45) Publication of the grant of the patent:
**12.06.91 Bulletin 91/24**

(84) Designated Contracting States:
**BE DE FR NL**

(56) References cited:
**FR-A- 1 296 070     NO-C- 99 180**
**US-A- 2 880 734     US-A- 2 905 182**
**US-A- 3 443 565     US-A- 3 763 868**
**US-A- 4 274 426**

(73) Proprietor: **POHJALA, Lauri**
**Kaukola**
**SF-38210 Vammala(FI)**

(72) Inventor: **POHJALA, Lauri**
**Kaukola**
**SF-38210 Vammala(FI)**

(74) Representative: **Liebau, Gerhard, Dipl.-Ing.**
**Birkenstrasse 39 Postfach 22 02 29**
**W-8900 Augsburg 22(DE)**

## Description

The present invention relates to a harvester machine used for threshing and assorting of the grain, peas, turnip rapes and other seeds, in which the separation and cleaning processes of the grain as well as the translation of the straw have been joined and connected to devices mounted to revolve about the same vertical axis, which devices consist of a vertically revolving threshing drum in the form of a truncated cone, and grate means in the form of a truncated cone and revolving screen means.

The US-A- 2 905 182 discloses a harvester machine of this type. In this harvester machine there is combined with the thresher drum an interiorly located grate unit inclined upwardly and outwardly in parallel relation to the thresher drum sidewall. The grate unit is fixedly attached to the thresher drum and rotates together with it. This harvesting machine has a small cylindrical screen fixed on top of the thresher drum which screen revolves also together with the drum. The screening process can take place only after the grain and the chaff are moved upwardly in the threshing drum under centrifugal force. Since there is provided only one small cylindrical screen the screening area is small and the screening process can take place only under centrifugal force. For these reasons the screening accuracy is poor. Furthermore the screen is difficultly accessible for maintenance from the outside because the screen is surrounded by a part of the threshing drum and of the stationary housing. A further disadvantage of this harvester is that the straw has to travel between stationary and moveable radial arms which might cause a danger of blockage .

The object of the invention is to provide a harvester machine of the type mentioned above in which the cleaning accuracy of the grain is improved.

This is achieved according to the invention in that the grate means and the screen means are combined in a grate and screening unit which comprises an innermost sieve having the form of a truncated cone and a group of several outermost sieves having the form of a truncated cone or parabolas, said grate and screening unit and threshing drum being arranged to revolve around each other at different speeds.

This harvester is made up of a vertically revolving threshing drum in the form of a truncated cone which separates the grain from the ears and the grain from the straw, and of the grate and screening unit revolving around the drum at different speed which cleans the grain by means of blower. These activities take place concurrently. In the thresher drum housing of this invention the screening unit extends from top to bottom so that the screening can take place concurrently with the separation process of the grain. A further advantage is that the area of the screening untit is noticeably larger. In this harvester due to the rotary screening unit it is possible to have several successively mounted sieves. Further the form of the screening unit of either a cone or a parabola enables the screening process to take place both under the gravitational and centrifugal force according to the angle of inclination and rate of revolution of the screening unit. Further the rotary screening unit can easily be provided with a cleaning brush. By all these facts the cleaning accuracy is essentially improved. The efficiency of the threshing machinery and the size of the grate and screening unit can be chosen as desired by altering the diameters, height and the angle on inclination of the truncated cones. Moreover the angle of inclination of the grate and screening unit is not necessarily the same as that of the thresher drum and also the mutual distances of the sieves can be adjusted. The sieves are parts of a cone or a parabola in order to be replaced through easy access maintenance flap doors in the housing without taking off the whole grate and screening unit. The advantages of this invention are that due to the coherent structure of the mechanism the harvester can be made smaller and lighter-weight than the conventional types.

Other features of the invention have been explained in the patent claims.

Further objects and advantages of the invention are depicted and illustrated in the following text and accompanying drawing.

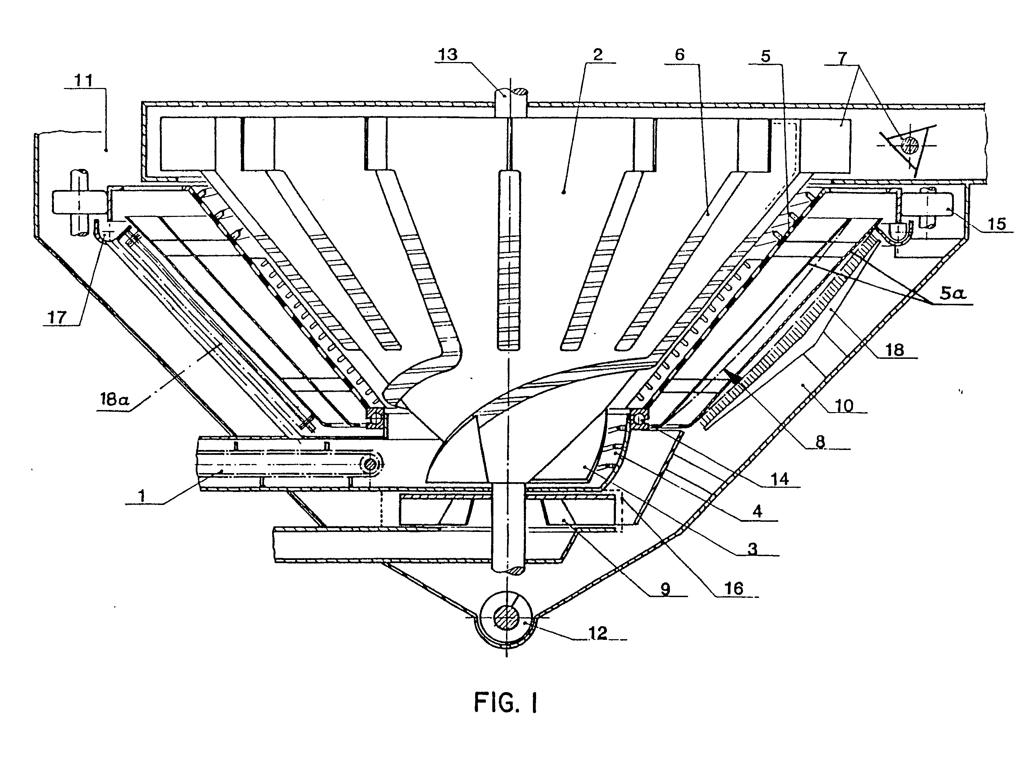

Figure 1 shows the harvester broken away to illustrate the sectional side elevation. Alternative solutions are illustrated on both sides of the median.

The cut grain is passed on the feed-in elevator (endless conveyor) 1 onto the impellers 3 at the bottom of the thresher drum 2. The rotating impellers 3 set up air circulation acting on the material and the upward movement which is further assisted by fingers in the auger housing 4 whereby the grain is delivered onto the rotary thresher drum 2 with which the innermost screening sieve 5 in the form of a truncated cone functions as the grate unit rotating at different speed. The beater devices 6 (rods or bars) on the periphery of the thresher drum 2 together with the fingers on the grate unit assist in translating the straw upwards in the threshing process and finally passing it into the straw discharge unit 7. This discharge unit consists of blade elements on top of the thresher drum 2 and straw beater, which are well-known devices.

Concurrently with threshing process the cleaning process of the grain takes place in the grate and screening unit 8 under gravitational and centrifugal force assisted by means of air-circulating impellers 9. The outermost sieves 5a (there may be several of them) can be cone-shaped or parabolas as shown in the drawing. The air flow comes through a screen ring 16 of fine mesh screen material, circulates in the grate and screening unit 8 and in the thresher drum housing 10 and passes out of the drum through an outlet 11 in the head portion of the thresher drum housing 10.

The inclination and rotary speed of the grate and screening unit 8 is so adjusted as to advance the upward movement of the grain into a wider space. The circular or longitudinal perforations of the sieves 5,5a are so adjusted as to make the screening as efficient as possible. The cleaned grain falls onto the bottom of the thresher drum housing 10 from where it is passed to the grain conveyor 12. The grain conveyor 12 is any kind of well-known type. The partly threshed grain with returns which need rethreshing can be collected from the top of the grate and screen unit 8 by means of chute conveyor 17 to be rethreshed. To keep the outermost sieve 5a clean the thresher drum housing 10 can be provided if desired with a brush 18,18a either stationary or engaged with gears on both ends and revolves by means of the grate and screening unit 8.

The essential feature of the invention is that the thresher drum is in the form of a truncated cone mounted to revolve about a vertical axis 13. Thus the threshing clearance can be easily adjusted by mere lifting the thresher drum 2. Further the cone shape enables the threshing and separation processes to take place in an increasingly widening space. Because the drum is mounted around a vertical axis it is easy to take off for maintenance. The rotary grate and screening unit 8 has been mounted at the bottom with a large thrust bearing 14 and on top is supported by the rubber rolls 15 which are attached to the thresher drum housing 10 and rotate the unit 8. Thus also the grate and screening unit 8 is easy to disengage for maintenance after the threshing drum has been removed. The sieves 5a are parts of a cone or a parabola in order to be replaced through the easy access maintenance flap doors in the housing 10 without taking off the whole grate and screening unit 8.

## Claims

1. A harvester machine used for threshing and assorting of the grain, peas, turnip rapes and other seeds, in which the separation and cleaning processes of the grain as well as the translation of the straw have been joined and connected to devices mounted to revolve about the same vertical axis, which devices consist of a vertically revolving threshing drum (2) in the form of a truncated cone, and grate means in the form of a truncated cone and revolving screen means, **characterized** in that the grate means and the screen means are combined in a grate and screening unit (8) which comprises an innermost sieve (5) having the form of a truncated cone and a group of several outermost sieves (5a) having the form of a truncated cone or parabolas, said grate and screening unit (8) and threshing drum (2) being arranged to revolve around each other at different speeds.

2. A harvester machine of claim 1, **characterized** in that both the separation and cleaning process of the grain take place under gravitational and centrifugal force.

3. A harvester machine of claim 1, **characterized** in that the threshing drum (2) and the grate and screening unit (8) are built with different angles of inclinations.

4. A harvester machine of claim 1, **characterized** in that the grate and screening unit (8) is mounted at its bottom with a large thrust bearing (14) and on its top the unit is supported by the rubber rolls (15) rotating the unit.

5. A harvester machine of claim 1, **characterized** in that the outermost sieves (5a) of the grate and screening unit (8) are part of the truncated cone or the parabola in order to be replaced through easy access maintenance flap doors in the thresher drum housing (10) without taking off the whole grate unit.

6. A harvester machine of claim 1, **characterized** in that the innermost sieve (5) of the grate and screening unit (8) is a part of the truncated cone in order to be replaced through easy access maintenance flap doors in the thresher drum housing (10) without taking off the whole grate unit.

7. A harvester machine of claim 1, characterised in that the grate and screening unit (8) is provided with brushes (18, 18a), either stationary or engaged with gears on both ends, cleaning the outermost sieve.

## Revendications

1. Moissonneuse utilisée pour le battage et pour le triage de céréales, de pois, de colza et d'autres graines, dans laquelle les processus de séparation et de nettoyage de la céréale, ainsi que le transfert de la paille, ont été conjugués et reliés à des dispositifs montés de manière à tourner autour du même axe vertical, lesquels dispositifs comprennent un tambour de battage (2) à rotation verticale, revêtant la forme d'un tronc de cône, un moyen de triturage en forme de tronc de cône, ainsi qu'un moyen rotatif de criblage, caractérisée par le fait que le moyen de triturage et le moyen de criblage sont combinés en une unité (8) de triturage et de criblage qui se compose d'un crible intérieur extrême (5) en forme de tronc de cône, et d'un groupe de plusieurs cribles extérieurs extrêmes (5a) en forme de tronc de cône ou de paraboles, ladite unité (8) de triturage et de criblage et ledit tambour de battage (2) étant agencés pour tourner l'une autour de l'autre à des vitesses différentes.

2. Moissonneuse selon la revendication 1, caractérisée par le fait que les processus de séparation et de nettoyage de la céréale ont lieu, l'un et l'autre, sous l'action d'une force gravitationnelle et centrifuge.

3. Moissonneuse selon la revendication 1, caractérisée par le fait que le tambour de battage (2) et l'unité (8) de triturage et de criblage sont réalisés avec des angles d'inclinaison différents.

4. Moissonneuse selon la revendication 1, caractérisée par le fait que l'unité (8) de triturage et de criblage est montée, sur son fond, par un palier de poussée (14) de grand dimensionnement, le sommet de cette unité étant supporté par les galets (15) en caoutchouc qui font tourner ladite unité.

5. Moissonneuse selon la revendication 1, caractérisée par le fait que les cribles extérieurs extrêmes (5a) de l'unité (8) de triturage et de criblage font partie du tronc de cône ou de la parabole en vue de leur remplacement, à travers des volets de maintenance aisément accessibles, ménagés dans le carter (10) du tambour de battage, sans devoir déposer toute l'unité de triturage.

6. Moissonneuse selon la revendication 1, caractérisée par le fait que le crible intérieur extrême (5) de l'unité (8) de triturage et de criblage fait partie du tronc de cône en vue de son remplacement, à travers des volets de maintenance aisément accessibles, ménagés dans le carter (10) du tambour de battage, sans devoir déposer toute l,unité de triturage.

7. Moissonneuse selon la revendication 1, caractérisée par le fait que l'unité (8) de triturage et de criblage est équipée de brosses (18, 18a) qui sont soit fixes, soit en prise aux deux extrémités avec des roues dentées, et nettoient le crible extérieur extrême.

## Ansprüche

1. Erntemaschine zum Dreschen und Sortieren von Getreide, Erbsen, Raps und anderen Samen, bei welcher die Trennungs-und Reinigungsprozesse der Samenkörner wie auch die Fortbewegung des Strohs vereinigt und mit Vorrichtungen verknüpft wurden, die montiert sind, um sich um die gleiche vertikale Achse zu drehen, wobei diese Vorrichtungen aus einer vertikalen rotierenden Dreschtrommel (2) in der Form eines Kegelstumpfes, und einer Rosteinrichtung in der Form eines Kegelstumpfes und einer rotierenden Siebeinrichtung bestehen, **dadurch gekennzeichnet**, daß die Rosteinrichtung und die Siebeinrichtung in einer Rost-Sieb-Einheit (8) kombiniert sind, die ein innerstes Sieb (5), welches die Form eines Kegelstumpfes aufweist, und eine Gruppe von mehreren äußersten Sieben (5a) umfaßt, welche die Form eines Kegelstumpfes oder eines Paraboloids aufweisen, wobei die Rost-Sieb-Einheit (8) und die Dreschtrommel (2) angeordnet sind, um umeinander mit unterschiedlichen Geschwindigkeiten zu rotieren.

2. Erntemaschine nach Anspruch 1, **dadurch gekennzeichnet**, daß sowohl die Trennung als auch der Reinigungsprozeß der Samenkörner unter Schwerkraft und Zentrifugalkraft stattfinden.

3. Erntemaschine nach Anspruch 1, **dadurch gekennzeichnet**, daß die Dreschtrommel (2) und die Rost-Sieb-Einheit (8) mit unterschiedlichen Neigungswinkeln gebaut sind.

4. Erntemaschine nach Anspruch 1, **dadurch gekennzeichnet**, daß die Rost-Sieb-Einheit (8) an ihrem Boden mit einem großen Drucklager (14) versehen ist und daß sie an ihrem oberen Ende durch Gummirollen (15) abgestützt ist, welche die Einheit drehen.

5. Erntemaschine nach Anspruch 1, **dadurch gekennzeichnet**, daß die äußersten Siebe (5a) der Rost-Sieb-Einheit Teil eines Kegelstumpfes oder der Parabel sind, um durch Leichtzugangs-Wartungs-Klapptüren in dem Dreschtrommelgehäuse (10) hindurch ersetzt zu werden, ohne die ganze Rost-Einheit abzunehmen.

6. Erntemaschine nach Anspruch 1, **dadurch gekennzeichnet**, daß das innerste Sieb (5) der Rost-Sieb-Einheit (8) ein Teil eines Kegelstumpfes ist, um durch Leichtzugangs-Wartungs-Klapptüren in dem Dreschtrommelgehäuse (10) hindurch ersetzt zu werden, ohne die ganze Rost-Einheit abzunehmen.

7. Erntemaschine nach Anspruch 1, **dadurch gekennzeichnet**, daß die Rost-Sieb-Einheit mit Bürsten (18, 18a) versehen ist, die entweder stationär sind oder an beiden Enden mit Antriebsorganen versehen sind und das äußerste Sieb reinigen.

FIG. I

EP 0 244 402 B1